# EUROPEAN PATENT APPLICATION

(11) **EP 2 703 467 A1**
(43) Date of publication of application: **05.03.2014**
(21) Application number: 13183942.5
(22) Date of filing: 20.08.2009
(51) Int. Cl.: C09K 8/12, C09K 8/03

(54) **High performance water based fluids**

(30) Priority: 22.08.2008 US 91221 P
(62) Divisional of application: 09782057.5
(71) Applicant: Schlumberger Norge AS, 4056 Tananger (NO)
(72) Inventor: Prebensen, Ole Iacob, KATY, TX Texas 77494 (US); Norman, Monica, 4007 Stavanger (NO); Fosse, Anne Myrvold, 4033 Stavanger (NO); Friestad, Anne-Marie, 4032 Stavanger (NO)
(74) Representative: Osha Liang SARL

(57) **Abstract**

A water based wellbore fluid that includes an aqueous fluid; a micronized weighting agent; a polysaccharide derivative; and at least one fatty acid ester derivative is disclosed.

## Description

### BACKGROUND OF INVENTION

### Field of the Invention

Embodiments disclosed herein relate generally to components of wellbore fluids. In particular, embodiments relate to water-based wellbore fluid and components thereof.

### Background Art

When drilling or completing wells in earth formations, various fluids typically are used in the well for a variety of reasons. Common uses for well fluids include: lubrication and cooling of drill bit cutting surfaces while drilling generally or drilling-in (i.e., drilling in a targeted petroliferous formation), transportation of "cuttings" (pieces of formation dislodged by the cutting action of the teeth on a drill bit) to the surface, controlling formation fluid pressure to prevent blowouts, maintaining well stability, suspending solids in the well, minimizing fluid loss into and stabilizing the formation through which the well is being drilled, fracturing the formation in the vicinity of the well, displacing the fluid within the well with another fluid, cleaning the well, testing the well, transmitting hydraulic horsepower to the drill bit, fluid used for emplacing a packer, abandoning the well or preparing the well for abandonment, and otherwise treating the well or the formation.

In most rotary drilling procedures the drilling fluid takes the form of a "mud," i.e., a liquid having solids suspended therein. The solids function to impart desired rheological properties to the drilling fluid and also to increase the density thereof in order to provide a suitable hydrostatic pressure at the bottom of the well.

Drilling fluids are generally characterized as thixotropic fluid systems. That is, they exhibit low viscosity when sheared, such as when in circulation (as occurs during pumping or contact with the moving drilling bit). However, when the shearing action is halted, the fluid should be capable of suspending the solids it contains to prevent gravity separation. In addition, when the drilling fluid is under shear conditions and a free-flowing near-liquid, it must retain a sufficiently high enough viscosity to carry all unwanted particulate matter from the bottom of the well bore to the surface. The drilling fluid formulation should also allow the cuttings and other unwanted particulate material to be removed or otherwise settle out from the liquid fraction.

There is an increasing need for drilling fluids having the rheological profiles that enable wells to be drilled more easily. Drilling fluids having tailored rheological properties ensure that cuttings are removed from the wellbore as efficiently and effectively as possible to avoid the formation of cuttings beds in the well which can cause the drill string to become stuck, among other issues. There is also the need from a drilling fluid hydraulics perspective (equivalent circulating density) to reduce the pressures required to circulate the fluid, reducing the exposure of the formation to excessive forces that can fracture the formation causing the fluid, and possibly the well, to be lost. In addition, an enhanced profile is necessary to prevent settlement or sag of the weighting agent in the fluid, if this occurs it can lead to an uneven density profile within the circulating fluid system which can result in well control (gas/fluid influx) and wellbore stability problems (caving/fractures).

To obtain the fluid characteristics required to meet these challenges the fluid must be easy to pump, so it requires the minimum amount of pressure to force it through restrictions in the circulating fluid system, such as bit nozzles or down-hole tools. In other words the fluid must have the lowest possible viscosity under high shear conditions. Conversely, in zones of the well where the area for fluid flow is large and the velocity of the fluid is slow or where there are low shear conditions, the viscosity of the fluid needs to be as high as possible in order to suspend and transport the drilled cuttings. This also applies to the periods when the fluid is left static in the hole, where both cuttings and weighting materials need to be kept suspended to prevent settlement. However, it should also be noted that the viscosity of the fluid should not continue to increase under static conditions to unacceptable levels. Otherwise when the fluid needs to be circulated again this can lead to excessive pressures that can fracture the formation or lead to lost time if the force required to regain a fully circulating fluid system is beyond the limits of the pumps.

Drilling fluids are typically classified according to their base material. The drilling mud may be either a water-based mud having solid particles suspended therein or an oil-based mud with water or brine emulsified in the oil to form a discontinuous phase and solid particules suspended in the oil continuous phase.

On both offshore and inland drilling barges and rigs, drill cuttings are conveyed up the hole by the drilling fluid. Water-based drilling fluids may be suitable for drilling in certain types of formations; however, for proper drilling in other formations, it is desirable to use an oil-based drilling fluid. With an oil-based drilling fluid, the cuttings, besides ordinarily containing moisture, are coated with an adherent film or layer of oily drilling fluid which may penetrate into the interior of each cutting. This is true despite the use of various vibrating screens, mechanical separation devices, and various chemical and washing techniques. Because of pollution to the environment, whether on water or on land, the cuttings cannot be properly discarded until the pollutants have been removed.

Thus, historically, the majority of oil and gas exploration has been performed with water-based muds. The primary reason for this preference is price and environmental compatibility. The used mud and cuttings from wells drilled with water-based muds can be readily disposed of onsite at most onshore locations and discharged from platforms in many U.S. offshore waters, as long as they meet current effluent limitations guidelines, discharge standards, and other permit limits. As described above, traditional oil-based muds made from diesel or mineral oils, while being substantially more expensive than water-based drilling fluids, are environmentally hazardous.

As a result, the use of oil-based muds has been limited to those situations where they are necessary. The selection of an oil-based well bore fluid involves a careful balance of both the good and bad characteristics of such fluids in a particular application. An especially beneficial property of oil-based muds is their ability to provide lower equivalent circulation densities, as well as better accretion and lubrication qualities. These properties permit the drilling of wells having a significant vertical deviation, as is typical of off-shore or deep water drilling operations or when a horizontal well is desired. In such highly deviated holes, torque and drag on the drill string are a significant problem because the drill pipe lies against the low side of the hole, and the risk of pipe sticking is high when water-based muds are used. In contrast oil-based muds provide a thin, slick filter cake which helps to prevent pipe sticking. Additionally, the use of oil-based muds is also common in high temperature wells because oil muds generally exhibit desirable rheological properties over a wider range of temperatures than water-based muds.

Accordingly, there exists a continuing need for water-based fluids having improved properties including equivalent circulation density, accretion, etc.

### SUMMARY OF INVENTION

In one aspect, embodiments disclosed herein relate to a water based wellbore fluid that includes an aqueous fluid; a micronized weighting agent; a polysaccharide derivative; and at least one fatty acid ester derivative.

According to an embodiment, the ester derivative of the at least one fatty acid is formed from at least one of a mono-, di-, tri-, and polyol. According to a preferred embodiment, the at least one fatty acid ester derivative comprises at least one of a sorbitan, triethanolamine, and a pentaerythritol based ester.

According to an embodiment, the at least one fatty acid ester derivative is formed from the at least one fatty acid and at least one alcohol in a ratio of at least 1:1. According to a preferred embodiment, the at least one fatty acid ester derivative is formed from the at least one fatty acid and at least one of sorbitan and pentaerythritol in a ratio of at least 2:1.

According to an embodiment, the micronized weighting agent is at least one selected from barite, calcium carbonate, dolomite, ilmenite, hematite, olivine, siderite, hausmannite, and strontium sulfate.

According to an embodiment, the micronized weighting agent comprises colloidal particles having a coating thereon.

According to an embodiment, the micronized weighting agent has a particle size d₉₀ of less than about 20 microns. According to a preferred embodiment, the micronized weighting agent has a coating thereon selected from at least one of oleic acid, polybasic fatty acids, alkylbenzene sulfonic acids, alkane sulfonic acids, linear alpha-olefin sulfonic acids, alkaline earth metal salts thereof, polyacrylate esters, and phospholipids.

According to an embodiment, the micronized weighting agent has a particle size d₉₀ of less than about 10 microns.

According to an embodiment, the micronized weighting agent has a particle size d₉₀ of less than about 5 microns.

According to an embodiment, the modified polysaccharide comprises at least one of a carboxymethyl cellulose and a starch.

According to an embodiment, the wellbore fluid further comprisesg at least one of a viscosifier, and a shale inhibitor.

In another aspect, embodiments disclosed herein relate to a method of treating a wellbore that includes mixing an aqueous fluid, a micronized weighting agent, a polysaccharide derivative, and at least one fatty acid ester and using said water based wellbore fluid during a drilling operation.

According to an embodiment, the ester derivative of the at least one fatty acid is formed from at least one of a mono-, di-, tri-, and polyol. According to a preferred embodiment, the at least one fatty acid ester derivative comprises at least one of a sorbitan, triethanolamine, and a pentaerythritol based ester.

According to an embodiment, the at least one fatty acid ester derivative is formed from the at least one fatty acid and at least one alcohol in a ratio of at least 1:1.

According to an embodiment, the micronized weighting agent is at least one selected from barite, calcium carbonate, dolomite, ilmenite, hematite, olivine, siderite, hausmannite, and strontium sulfate.

According to an embodiment, the micronized weighting agent has a particle size d₉₀ of less than about 20 microns.

According to an embodiment, the micronized weighting agent has a particle size d₉₀ of less than about 10 microns.

According to an embodiment, the micronized weighting agent has a particle size d₉₀ of less than about 5 microns.

According to an embodiment, the micronized weighting agent comprises a coating thereon selected from at least one of oleic acid, polybasic fatty acids, alkylbenzene sulfonic acids, alkane sulfonic acids, linear alpha-olefin sulfonic acids, alkaline earth metal salts thereof, polyacrylate esters, and phospholipids.

According to an embodiment, the method further comprises at least one of a viscosifier, and a shale inhibitor.

Other aspects and advantages of the invention will be apparent from the following description and the appended claims.

### BRIEF DESCRIPTION OF DRAWINGS

FIG. 1 shows fluid rheology of the example formulations.
FIG. 2 shows average accretion values for the example formulations in Arne clay.
FIG. 3 shows cuttings hardness values for the example formulations.
FIG. 4 shows recovery in Arne clay for the example formulations.
FIG. 5 shows static sag (separation of free fluid) for the example formulations.
FIG. 6 shows static sag factors for the example formulations.

### DETAILED DESCRIPTION

Embodiments disclosed herein relate to lubricants for use in water-based wellbore fluid formulations. In particular, embodiments described herein relate water-based wellbore fluids that include (at least) an aqueous base fluid, a micronized weighting agent, a polysaccharide derivative, and at least one ester derivative of a fatty acid. In the following description, numerous details are set forth to provide an understanding of the present disclosure. However, it will be understood by those skilled in the art that the present disclosure may be practiced without these details and that numerous variations or modifications from the described embodiments may be possible.

Fatty acid esters (one or more) may be used as anti-accretion additives in the fluids of the present disclosure. Ester derivatives may be formed by subjecting fatty acids to esterification with at least one mono-, di-, tri-, or polyol. Such fatty acids may include lauric acid (C12), mysristic acid (C14), palmitic acid (C16), stearic acid (C18), etc, in addition to unsaturated fatty acids such as myristoleic acid (C14), palmitoleic acid (C16), oleic acid (C18), linoleic acid (C18), alpha-linoleic acid (C18), erucic acid (C22), etc, or mixtures thereof. Further, one skilled in the art would appreciate that in addition to the acids mentioned there may be other C₁₂ to C₂₂ fatty acids may be esterfied for use as an anti-accretion additive. Thus, while conventional anti-accretion additives have included an ester, an organic (hydrocarbon) solvent, and a surfactant, drilling operations requiring water-based fluids may require exclusion of such solvents and/or surfactants depending on the environmental regulations for the particular region. Thus, by using fatty acid esters, solvents and/or surfactants may be avoided. Some similar esters (although for a different purpose) may be described in U.S. Patent Publication No. 2008-009422, which is assigned to the present assignee. One example suitable for use in the fluids of the present disclosure include EMI-2010, which is available from M-I LLC (Houston, Texas).

As mentioned above, the alcohol with which the fatty acid may be esterfied may include a mono-, di-, tri-, or polyol. Such alcohols may comprise at least one of sorbitane, pentaerythritol, polyglycol, glycerol, neopentyl glycol, trimethanolpropane, monoethanolamine, diethanolamine, triethanolamine, di- and/or tripentaerythritol, and the like. In a particular embodiment, the ester derivative may be formed by reaction with at least one of sorbitane, pentaerythritol, or triethanolamine. The reaction of at least one fatty acid with at least one mono-, di- tri-, or polyol may be conducted in a manner known by those skilled in the art. Such reactions may include, but are not limited to, Fischer (acid-catalyzed) esterification and acid-catalyzed transesterification, for example.

In one embodiment, the mole ratio of fatty acid to alcohol component may range from about 1:1 to about 5:1. In another embodiment, the ratio may be about 2:1 to about 4:1. More specifically, this mole ratio relates the reactive mole equivalent of available hydroxyl groups with the mole equivalent of carboxylic acid functional groups of the fatty acid. In one embodiment, the mole ratio of carboxylic acid of the at least one fatty acid to the hydroxyl groups of the at least one of sorbitane or pentaerythritol may range from about 1:1 to about 5:1, and from about 2:1 and about 4:1, in another embodiment.

In addition to the anti-accretion ester, the fluid may also contain at least one polysaccharide derivative, such as a carboxymethylcellulose (CMC) (optionally a polyanionic CMC (PAC)) derivative and/or a starch, to provide fluid loss control. Such starches may include potato starch, corn starch, tapioca starch, wheat starch and rice starch, etc. One example of such polysaccharides may include EMI-1992, which is available from M-I LLC (Houston, Texas).

Fluids used in embodiments disclosed herein may include micronized weighting agents. In some embodiments, the micronized weighting agents may be uncoated. In other embodiments, the micronized weighting agents may be coated with a dispersant. For example, fluids used in some embodiments disclosed herein may include dispersant coated micronized weighting agents. The coated weighting agents may be formed by either a dry coating process or a wet coating process. Weighting agents suitable for use in other embodiments disclosed herein may include those disclosed in U.S. Patent Application Publication Nos. 20040127366, 20050101493, 20060188651, 20080064613, and U.S. Patent Nos. 6,586,372 and 7,176,165.

Micronized weighting agents used in some embodiments disclosed herein may include a variety of compounds well known to one of skill in the art. In a particular embodiment, the weighting agent may be selected from one or more of the materials including, for example, barium sulphate (barite), calcium carbonate (calcite), dolomite, ilmenite, hematite or other iron ores, olivine, siderite, manganese oxide, and strontium sulphate. One having ordinary skill in the art would recognize that selection of a particular material may depend largely on the density of the material as typically, the lowest wellbore fluid viscosity at any particular density is obtained by using the highest density particles. However, other considerations may influence the choice of product such as cost, local availability, the power required for grinding, and whether the residual solids or filter cake may be readily removed from the well.

In one embodiment, the micronized weighting agent may have a d₉₀ ranging from 1 to 25 microns and a d₅₀ ranging from 0.5 to 10 microns. In another embodiment, the micronized weighting agent includes particles having a d₉₀ ranging from 2 to 8 microns and a d₅₀ ranging from 0.5 to 5 microns. One of ordinary skill in the art would recognize that, depending on the sizing technique, the weighting agent may have a particle size distribution other than a monomodal distribution. That is, the weighting agent may have a particle size distribution that, in various embodiments, may be monomodal, which may or may not be Gaussian, bimodal, or polymodal.

It has been found that a predominance of particles that are too fine (*i.e.* below about 1 micron) results in the formation of a high rheology paste. Thus, it has been unexpectedly found that the weighting agent particles must be sufficiently small to avoid issues of sag, but not so small as to have an adverse impact on rheology. Thus weighting agent (barite) particles meeting the particle size distribution criteria disclosed herein may be used without adversely impacting the rheological properties of the wellbore fluids. In one embodiment, a micronized weighting agent is sized such that: particles having a diameter less than 1 microns are 0 to 15 percent by volume; particles having a diameter between 1 microns and 4 microns are 15 to 40 percent by volume; particles having a diameter between 4 microns and 8 microns are 15 to 30 by volume; particles having a diameter between 8 microns and 12 microns are 5 to 15 percent by volume; particles having a diameter between 12 microns and 16 microns are 3 to 7 percent by volume; particles having a diameter between 16 microns and 20 microns are 0 to 10 percent by volume; particles having a diameter greater than 20 microns are 0 to 5 percent by volume. In another embodiment, the micronized weighting agent is sized so that the cumulative volume distribution is: less than 10 percent or the particles are less than 1 microns; less than 25 percent are in the range of 1 microns to 3 microns; less than 50 percent are in the range of 2 microns to 6 microns; less than 75 percent are in the range of 6 microns to 10 microns; and less than 90 percent are in the range of 10 microns to 24 microns.

The use of micronized weighting agents has been disclosed in U.S. Patent Application Publication No. 20050277553 assigned to the assignee of the current application. Particles having these size distributions may be obtained by several means. For example, sized particles, such as a suitable barite product having similar particle size distributions as disclosed herein, may be commercially purchased. A coarser ground suitable material may be obtained, and the material may be further ground by any known technique to the desired particle size. Such techniques include jet-milling, ball milling, high performance wet and dry milling techniques, or any other technique that is known in the art generally for milling powdered products. In one embodiment, appropriately sized particles of barite may be selectively removed from a product stream of a conventional barite grinding plant, which may include selectively removing the fines from a conventional API-grade barite grinding operation. Fines are often considered a by-product of the grinding process, and conventionally these materials are blended with courser materials to achieve API-grade barite. However, in accordance with the present disclosure, these by-product fines may be further processed via an air classifier to achieve the particle size distributions disclosed herein. In yet another embodiment, the micronized weighting agents may be formed by chemical precipitation. Such precipitated products may be used alone or in combination with mechanically milled products.

In some embodiments, the micronized weighting agents include solid colloidal particles having a deflocculating agent or dispersant coated onto the surface of the particle. Further, one of ordinary skill would appreciate that the term "colloidal" refers to a suspension of the particles, and does not impart any specific size limitation. Rather, the size of the micronized weighting agents of the present disclosure may vary in range and are only limited by the claims of the present application. The micronized particle size generates high density suspensions or slurries that show a reduced tendency to sediment or sag, while the dispersant on the surface of the particle controls the inter-particle interactions resulting in lower rheological profiles. Thus, the combination of high density, fine particle size, and control of colloidal interactions by surface coating the particles with a dispersant reconciles the objectives of high density, lower viscosity and minimal sag.

In some embodiments, a dispersant may be coated onto the particulate weighting additive during the comminution (grinding) process. That is to say, coarse weighting additive is ground in the presence of a relatively high concentration of dispersant such that the newly formed surfaces of the fine particles are exposed to and thus coated by the dispersant. It is speculated that this allows the dispersant to find an acceptable conformation on the particle surface thus coating the surface. Alternatively, it is speculated that because a relatively higher concentration of dispersant is in the grinding fluid, as opposed to that in a drilling fluid, the dispersant is more likely to be absorbed (either physically or chemically) to the particle surface. As that term is used in herein, "coating of the surface" is intended to mean that a sufficient number of dispersant molecules are absorbed (physically or chemically) or otherwise closely associated with the surface of the particles so that the fine particles of material do not cause the rapid rise in viscosity observed in the prior art. By using such a definition, one of skill in the art should understand and appreciate that the dispersant molecules may not actually be fully covering the particle surface and that quantification of the number of molecules is very difficult. Therefore, by necessity, reliance is made on a results oriented definition. As a result of the process, one can control the colloidal interactions of the fine particles by coating the particle with dispersants prior to addition to the drilling fluid. By doing so, it is possible to systematically control the rheological properties of fluids containing in the additive as well as the tolerance to contaminants in the fluid in addition to enhancing the fluid loss (filtration) properties of the fluid.

In some embodiments, the weighting agents include dispersed solid colloidal particles with a weight average particle diameter (d₅₀) of less than 10 microns that are coated with a polymeric deflocculating agent or dispersing agent. In other embodiments, the weighting agents include dispersed solid colloidal particles with a weight average particle diameter (d₅₀) of less than 8 microns that are coated with a polymeric deflocculating agent or dispersing agent; less than 6 microns in other embodiments; less than 4 microns in other embodiments; and less than 2 microns in yet other embodiments. The fine particle size will generate suspensions or slurries that will show a reduced tendency to sediment or sag, and the polymeric dispersing agent on the surface of the particle may control the inter-particle interactions and thus will produce lower rheological profiles. It is the combination of fine particle size and control of colloidal interactions that reconciles the two objectives of lower viscosity and minimal sag. Additionally, the presence of the dispersant in the comminution process yields discrete particles which can form a more efficiently packed filter cake and so advantageously reduce filtration rates.

Coating of the micronized weighting agent with the dispersant may also be performed in a dry blending process such that the process is substantially free of solvent. The process includes blending the weighting agent and a dispersant at a desired ratio to form a blended material. In one embodiment, the weighting agent may be un-sized initially and rely on the blending process to grind the particles into the desired size range as disclosed above. Alternatively, the process may begin with sized weighting agents. The blended material may then be fed to a heat exchange system, such as a thermal desorption system. The mixture may be forwarded through the heat exchanger using a mixer, such as a screw conveyor. Upon cooling, the polymer may remain associated with the weighting agent. The polymer/weighting agent mixture may then be separated into polymer coated weighting agent, unassociated polymer, and any agglomerates that may have formed. The unassociated polymer may optionally be recycled to the beginning of the process, if desired. In another embodiment, the dry blending process alone may serve to coat the weighting agent without heating.

Alternatively, a sized weighting agent may be coated by thermal adsorption as described above, in the absence of a dry blending process. In this embodiment, a process for making a coated substrate may include heating a sized weighting agent to a temperature sufficient to react monomeric dispersant onto the weighting agent to form a polymer coated sized weighting agent and recovering the polymer coated weighting agent. In another embodiment, one may use a catalyzed process to form the polymer in the presence of the sized weighting agent. In yet another embodiment, the polymer may be preformed and may be thermally adsorbed onto the sized weighting agent.

In some embodiments, the micronized weighting agent may be formed of particles that are composed of a material of specific gravity of at least 2.3; at least 2.4 in other embodiments; at least 2.5 in other embodiments; at least 2.6 in other embodiments; and at least 2.68 in yet other embodiments. For example, a weighting agent formed of particles having a specific gravity of at least 2.68 may allow wellbore fluids to be formulated to meet most density requirements yet have a particulate volume fraction low enough for the fluid to be pumpable.

As mentioned above, embodiments of the micronized weighting agent may include a deflocculating agent or a dispersant. In one embodiment, the dispersant may be selected from carboxylic acids of molecular weight of at least 2.5 10⁻²² g (150 Daltons), such as oleic acid and polybasic fatty acids, alkylbenzene sulphonic acids, alkane sulphonic acids, linear alpha-olefin sulphonic acids, phospholipids such as lecithin, including salts thereof and including mixtures thereof. Synthetic polymers may also be used, such as HYPERMER OM-1 (Imperial Chemical Industries, PLC, London, United Kingdom) or polyacrylate esters, for example. Such polyacrylate esters may include polymers of stearyl methacrylate and/or butylacrylate. In another embodiment, the corresponding acids methacrylic acid and/or acrylic acid may be used. One skilled in the art would recognize that other acrylate or other unsaturated carboxylic acid monomers (or esters thereof) may be used to achieve substantially the same results as disclosed herein.

When a dispersant coated micronized weighting agent is to be used in water-based fluids, a water soluble polymer of molecular weight of at least 3.3 10⁻²¹ g (2000 Daltons) may be used in a particular embodiment. Examples of such water soluble polymers may include a homopolymer or copolymer of any monomer selected from acrylic acid, itaconic acid, maleic acid or anhydride, hydroxypropyl acrylate vinylsulphonic acid, acrylamido 2-propane sulphonic acid, acrylamide, styrene sulphonic acid, acrylic phosphate esters, methyl vinyl ether and vinyl acetate or salts thereof.

The polymeric dispersant may have an average molecular weight from about 10⁻²⁰ g (10,000 Daltons) to about 5.0 10⁻¹⁹ g (300,000 Daltons) in one embodiment, from about 2.8 10⁻²⁰ g (17,000 Daltons) to about 6.6 10⁻²⁰ g (40,000 Daltons) in another embodiment, and from about 3.3 10⁻¹⁹- 5.0 10⁻¹⁹ g (200,000-300,000 Daltons) in yet another embodiment. One of ordinary skill in the art would recognize that when the dispersant is added to the weighting agent during a grinding process, intermediate molecular weight polymers (1.7 10⁻²⁰-5.0 10⁻¹⁹ g (10,000-300,000 Daltons)) may be used.

Further, it is specifically within the scope of the embodiments disclosed herein that the polymeric dispersant be polymerized prior to or simultaneously with the wet or dry blending processes disclosed herein. Such polymerizations may involve, for example, thermal polymerization, catalyzed polymerization, initiated polymerization or combinations thereof.

The aqueous fluid of the wellbore fluid may include at least one of fresh water, sea water, brine, mixtures of water and water-soluble organic compounds and mixtures thereof. For example, the aqueous fluid may be formulated with mixtures of desired salts in fresh water. Such salts may include, but are not limited to alkali metal chlorides, hydroxides, or carboxylates, for example. In various embodiments of the drilling fluid disclosed herein, the brine may include seawater, aqueous solutions wherein the salt concentration is less than that of sea water, or aqueous solutions wherein the salt concentration is greater than that of sea water. Salts that may be found in seawater include, but are not limited to, sodium, calcium, aluminum, magnesium, potassium, strontium, and lithium, salts of chlorides, bromides, carbonates, iodides, chlorates, bromates, formates, nitrates, oxides, phosphates, sulfates, silicates, and fluorides. Salts that may be incorporated in a given brine include any one or more of those present in natural seawater or any other organic or inorganic dissolved salts. Additionally, brines that may be used in the drilling fluids disclosed herein may be natural or synthetic, with synthetic brines tending to be much simpler in constitution. In one embodiment, the density of the drilling fluid may be controlled by increasing the salt concentration in the brine (up to saturation). In a particular embodiment, a brine may include halide or carboxylate salts of mono- or divalent cations of metals, such as cesium, potassium, calcium, zinc, and/or sodium.

Other additives that may be included in the wellbore fluids disclosed herein include for example, conventional API grade weighting agents, wetting agents, clays, viscosifiers, surfactants, shale inhibitors, filtration reducers, dispersants, interfacial tension reducers, pH buffers, mutual solvents, thinners (such as lignins and tannins), thinning agents and cleaning agents. The addition of such agents should be well known to one of ordinary skill in the art of formulating drilling fluids and muds.

Viscosifiers, such as water soluble polymers and polyamide resins, may also be used. Such viscosifiers may include polysaccharide derivatives such as xanthan gum, guar gum, hydroxyalkylguar, hydroxyalkylcellulose, carboxyalkylhydroxyalkylguar, wellan gum, gellan gum, diutan, scleroglucan, succinoglucan, various celluloses, biopolymers, and the like. The amount of viscosifier used in the composition can vary upon the end use of the composition. However, normally about 0.1 % to 6% by weight range is sufficient for most applications. Other viscosifiers include DUOVIS® and BIOVIS® manufactured and distributed by M-I L.L.C.

Thinners may be added to the drilling fluid in order to reduce flow resistance and gel development in various embodiments disclosed herein. Typically, lignosulfonates, lignitic materials, modified lignosulfonates, polyphosphates and tannins are added. In other embodiments low molecular weight polyacrylates can also be added as thinners. Other functions performed by thinners include the reduction of filtration and cake thickness, to counteract the effects of salts, to minimize the effects of water on the formations drilled, to emulsify oil in water, and to stabilize mud properties at elevated temperatures. TACKLE® (manufactured and commercially available from M-I L.L.C.) liquid polymer is a low- molecular- weight, anionic thinner that may be used to deflocculate a wide range of water-based drilling fluids.

Shale inhibition is achieved by preventing water uptake by clays, and by providing superior cuttings integrity. Shale inhibitor additives effectively inhibit shale or gumbo clays from hydrating and minimizes the potential for bit balling. Shale inhibitors may include ULTRAHIB™ (manufactured and distributed by M-I L.L.C.) which is a liquid polyamine. The shale inhibitor may be added directly to the mud system with no effect on viscosity or filtration properties. Many shale inhibitors serve the dual role as filtration reducers as well. Examples may include, but are not limited to ACTIGUARD™, ASPHASOL, KLA-STOP™ NS and CAL-CAP™ all manufactured and distributed by M-I L.L.C. Other filtration reducers may include polysaccharide-based UNITROL™, manufactured and distributed by M-I L.L.C.

A wellbore fluid may be formed by mixing an aqueous fluid with the above described components, and may then be used during a drilling operation. The fluid may be pumped down to the bottom of the well through a drill pipe, where the fluid emerges through ports in the drilling bit, for example. The fluid may be used in conjunction with any drilling operation, which may include, for example, vertical drilling, extended reach drilling, and directional drilling. One skilled in the art would recognize that water-based drilling muds may be prepared with a large variety of formulations. Specific formulations may depend on the state of drilling a well at a particular time, for example, depending on the depth and/or the composition of the formation. The drilling mud compositions described above may be adapted to provide improved water-based drilling muds under conditions of high temperature and pressure, such as those encountered in deep wells.

### EXAMPLE

The following examples were used to test the properties of a fluid of the present disclosure (Sample 1) as compared to other water-based fluids (Comparative Samples 1-3. The formulations are shown in Table 1 below, and include the following additives: DUOVIS®, a xanthan gum, and BIOVIS®, a scleroglucan viscosifier, are used as viscosifiers; UNITROL™ is a modified polysaccharide used in filtration; POLYPAC® ELV polyanionic cellulose (PAC), a water-soluble polymer designed to control fluid loss; ULTRACAP™, a low-molecular-weight, dry acrylamide copolymer designed to provide cuttings encapsulation and clay dispersion inhibition; ULTRAFREE™, an anti-accretion additive which may be used to eliminate bit balling and enhance rate of penetration (ROP); ULTRAHIB™ NS, a shale inhibitor; EMI 1992, a modified polysaccharide fluid loss control agent; DUOTEC™ NS, a xanthan gum viscosifier; GLYDRIL® MC, a polyalkylene glycol; SILDRIL™ L, a shale inhibitor; WB WARP® Concentrate, a water-based dispersant-coated micronized barite fluid concentrate; EMI 2010, an fatty acid ester blend anti-accretion agent, and ULTRAFREE™ NS, an anti-accretion agent, all of which are available from M-I LLC (Houston, Texas).

**Table 1.**

| Sample | Conc. | 1 | CS 1 | CS 2 | CS 3 |
|---|---|---|---|---|---|
| Seawater | g/l | 587 | - | - | - |
| Freshwater | g/l | - | 755 | 765 | 703 |
| KCl | g/l | - | 40 | 120 | 120 |
| NaCl | g/l | - | 40 | - | - |
| KlaStop NS | g/l | 30 | - | - | - |
| UltraHib NS | g/l | - | 31 | - | - |
| UltraCap | g/l | - | 6 | - | - |
| EMI 1992 | g/l | 11 | - | - | - |
| Polypac ELV | g/l | - | 15 | 13 | 20 |
| Duovis Plus NS | g/l | 1,5 | - | - | - |
| Duotec NS | g/l | - | 2,5 | 3 | 3 |
| Glydril MC | g/l | - | - | 30 | - |
| Soda Ash | g/l | - | - | 0,7 | - |
| Sildril L | %-vol | - | - | - | 10 |
| WB WARP Concentrate, 2.44 sg | g/l | 823 | - | - | - |
| Barite | g/l | 596 | 596 | 570 | 510 |
| Citric acid pH<9.0 | g/l | - | X | - | - |
| EMI 2010 | %-vol | 5 | - | - | - |
| Ultrafree NS | %-vol | - | 2 | - | - |

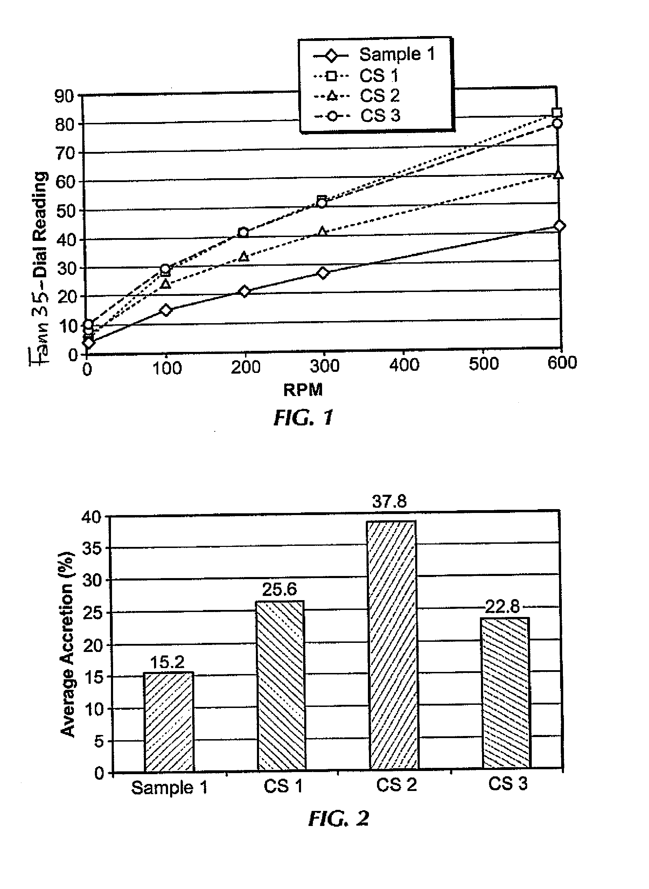

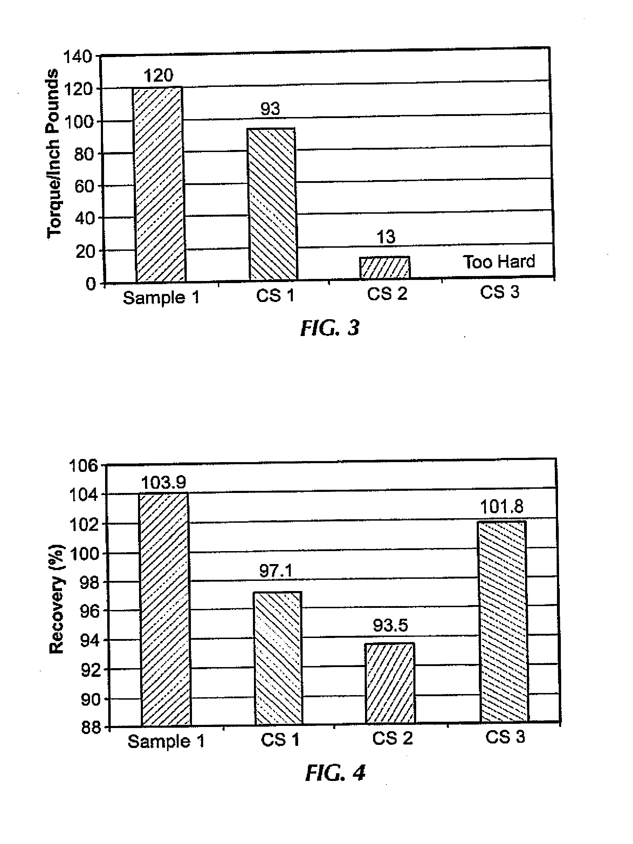

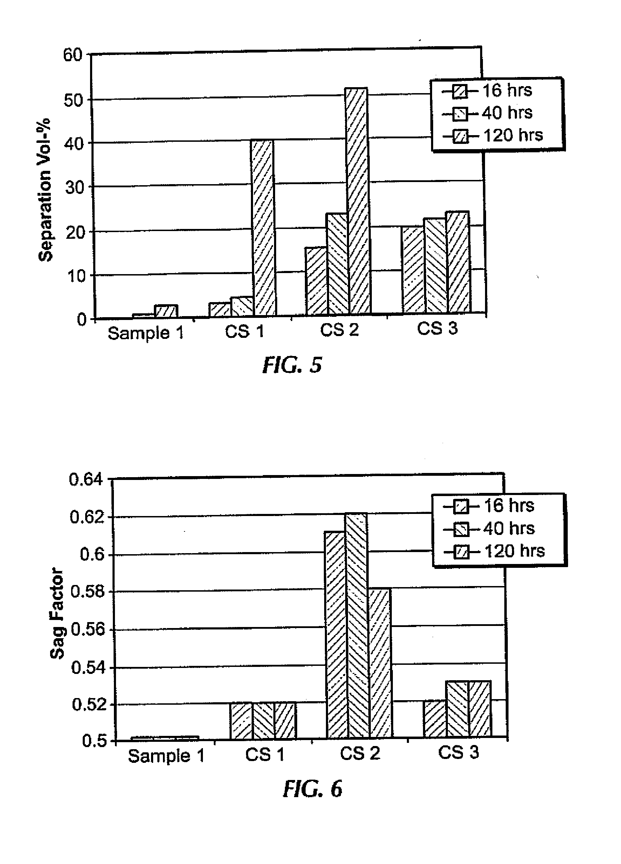

The rheological properties of the fluid formulations at 48.89°C (120°F) were determined using a Fann Model 35 Viscometer, available from Fann Instrument Company, the results of which are shown in FIG. 1. Accretion results with Arne clay are shown in FIG. 2, cuttings hardness values in FIG. 3, recovery in FIG. 4, static sag in FIG. 5, and static sag factor in FIG. 6.

Advantages of the embodiments disclosed herein may include enhanced rheological properties of the fluids beyond those typically achievable for water-based fluid. The fluid formulation may result in a water-based fluid having analogous or similar properties as those expected for oil-based fluids, but having the added benefit of being environmentally friendly. In particular, the fluid may possess equivalent circulation densities lower than those achievable with conventional water-based fluids, are comparable to those achievable with environmentally unfriendly oil-based fluids. In addition, the fluids may possess low accretion, improved inhibition, lower cuttings hardness, and low torque values. The fatty acid esters, in addition to reducing accretion, may also exhibit low foaming in water and high temperature stabilities, which may provide improvement in extended reach drilling operations. Because fatty acids are generally nontoxic, biodegradable, and a renewable resource, its derivatives may provide environmentally compatible anti-accretion agents (which are conventionally formed with less environmentally friendly organic (hydrocarbon) solvents and surfactants).

## Claims

1. A water based wellbore fluid, comprising:
an aqueous fluid;
a micronized weighting agent;
a polysaccharide derivative; and
at least one fatty acid ester derivative formed from reaction between at least one fatty acid and at least one of monoethanolamine, diethanolamine and triethanolamine.

2. The wellbore fluid of claim 1, wherein the at least one fatty acid ester derivative comprises at least one of a sorbitan, triethanolamine, and a pentaerythritol based ester.

3. The wellbore fluid of any one of claims 1 and 2, wherein the ratio between the at least one fatty acid and the at least one monoethanolamine, diethanolamine or triethanolamine ranges from 1:1 to 5:1.

4. The wellbore fluid of any one of the preceding claims, wherein the micronized weighting agent is at least one selected from barite, calcium carbonate, dolomite, ilmenite, hematite, olivine, siderite, hausmannite, and strontium sulfate.

5. The wellbore fluid of any of the preceding claims, wherein the micronized weighting agent is coated with a dispersant

6. The wellbore fluid of any one of claims 1 to 4, wherein the micronized weighting agent comprises colloidal particles having a dispersant coating thereon.

7. The wellbore fluid of any of one the preceding claims, wherein the micronized weighting agent has a particle size d₉₀ of less than about 20 microns.

8. The wellbore fluid of claim 7, wherein the micronized weighting agent has a particle size d₉₀ of less than about 10 microns.

9. The wellbore fluid of claim 7, wherein the micronized weighting agent has a particle size d₉₀ of less than about 5 microns.

10. The wellbore fluid of any one of claims 5 and 6, wherein the micronized weighting agent has a coating thereon selected from at least one of oleic acid, polybasic fatty acids, alkylbenzene sulfonic acids, alkane sulfonic acids, linear alpha-olefin sulfonic acids, alkaline earth metal salts thereof, polyacrylate esters, and phospholipids.

11. The wellbore fluid of any of one the preceding claims, wherein the modified polysaccharide comprises at least one of a carboxymethyl cellulose and a starch.

12. The wellbore fluid of any of one the preceding claims, further comprising at least one of a viscosifier, and a shale inhibitor.

13. A method of treating a wellbore, comprising:
mixing an aqueous fluid, a micronized weighting agent, a polysaccharide derivative, and at least one fatty acid ester to form a water-based wellbore fluid of any of claims 1 to 12; and
using said water based wellbore fluid during a drilling operation.
